# EUROPEAN PATENT APPLICATION

(11) **EP 4 654 118 A1**
(43) Date of publication of application: **26.11.2025**
(21) Application number: 23917792.6
(22) Date of filing: 28.12.2023
(51) Int. Cl.: G06Q 50/18, G06F 16/28

(54) **INFORMATION PROCESSING DEVICE, INFORMATION PROCESSING METHOD, AND PROGRAM**

(30) Priority: 18.01.2023 JP 2023005763
(71) Applicant: Alps Alpine Co., Ltd., Tokyo 145-8501 (JP)
(72) Inventor: ITOH, Akihisa, Tokyo 145-8501 (JP); NAKAMURA, Maki, Tokyo 145-8501 (JP)
(74) Representative: Maiwald GmbH
(86) International application number: PCT/JP2023/047257
(87) International publication number: WO 2024/154582

(57) **Abstract**

A technique is provided that enable identification of characteristics of a technical portfolio of a specific applicant. An information processing apparatus (1) includes an acquirer (10), an identifier (20), and a calculator (30). The acquirer (10) acquires patent information related to a plurality of patents. The identifier (20) identifies first information based on the patent information. The first information includes information related to the number of patents held by each applicant for a predetermined technical classification, and the number of patents held by a specific applicant for the predetermined technical classification. The calculator (30) calculates second information based on the first information. The second information includes information related to at least one of a share or a rank of the specific applicant for a predetermined technical classification.

## Description

### Technical Field

The present invention relates to an information processing apparatus, an information processing method, and a program for executing information processing based on patent information.

### Background Art

A technique is known in which patent information is used to analyze information about companies or individuals who are patent applicants or patent holders. For example, Patent Document 1 discloses a technique in which evaluation values related to patents are calculated, aggregated for each patent holder and for each patent-industry classification obtained by associating patent classifications with industry classifications, and the growth rate of patent strength in each patent-industry classification of the patent holder is calculated by comparing the aggregated values over time. Patent Document 2 discloses a technique for classifying patents held by companies into predetermined categories based on the values of the patents.

### Citation List

### Patent Documents

Patent Document 1: Japanese Patent Application Laid-Open No. 2015-225357
Patent Document 2: Japanese Patent Application Laid-Open No. 2003-281358

### Summary of Invention

### Technical Problem

According to the technique disclosed in Patent Document 1, it is possible to calculate, for each company, the growth rate of patent strength with respect to technologies that are highly relevant to each industry. According to the technique disclosed in Patent Document 2, it becomes easier to determine whether a patent is unnecessary by classifying individual patents based on their value. However, in the conventional techniques, it has been difficult to enable identification of the characteristics of a technical portfolio of a specific applicant.

Accordingly, it is an object of the present invention to provide an information processing apparatus, an information processing method, and a program enabling identification of the characteristics of the technical portfolio of the specific applicant.

### Solution to Problem

According to an aspect of the present invention, an information processing apparatus includes an acquirer configured to acquire patent information related to a plurality of patents;
an identifier configured to identify first information based on the patent information, the first information including: a number of patents held by each applicant for a predetermined technical classification, and a number of patents held by a specific applicant for the predetermined technical classification; and a calculator configured to calculate second information based on the first information, the second information including at least one of a share or a rank of the specific applicant for the predetermined technical classification. According to such a configuration, it is possible to identify characteristics of a technical portfolio of the specific applicant.

In one embodiment, the calculator may be configured to calculate, as the second information, information including the share and the rank of the specific applicant.

In one embodiment, when the predetermined technical classification includes a plurality of classifications, the identifier may be configured to identify, as the first information, information including, for each of the plurality of technical classifications, the number of patents held by each applicant and the number of patents held by the specific applicant.

In one embodiment, the information processing apparatus may further include an output unit configured to output the second information.

In one embodiment, the calculator may be configured to calculate, for each of the plurality of technical classifications, a total evaluation value based on a total number of patents held by the plurality of applicants; calculate, for each of the plurality of technical classifications, a specific evaluation value based on the number of patents held by the specific applicant; and determine, for each of the plurality of technical classifications, a share of the specific applicant, based on a ratio of the specific evaluation value to the total evaluation value. According to such a configuration, the share can be determined by comparing the specific evaluation value and the total evaluation value for each of the plurality of technical classifications.

In one embodiment, the calculator may be configured to calculate, for each of the plurality of technical classifications, an individual evaluation value based on the number of patents held by each of the plurality of applicants; and determine, for each of the plurality of technical classifications, a rank of the specific applicant, based on a relative rank of a corresponding evaluation value of the specific applicant among the individual evaluation values.

In one embodiment, the information processing apparatus may further include a generator configured to generate display information including a plurality of plots arranged at respective positions in a coordinate system with a first axis representing the rank and a second axis representing the share, each of the plurality of plots corresponding to one of the plurality of technical classifications for the specific applicant, wherein the output unit is configured to output the display information as the second information. According to such a configuration, the positions of the plurality of technical classifications of the specific applicant can be expressed visually or relatively easily identified.

In one embodiment, the calculator may be configured to calculate a specific evaluation value based on the number of patents held by the specific applicant for each of the plurality of technical classifications, and the generator is configured to generate the display information such that each of the plurality of plots has a size based on the specific evaluation value of the corresponding technical classification. According to such a configuration, the positions of the plurality of technical classifications of the specific applicant can be expressed more visually or relatively easily identified.

In one embodiment, the generator may be configured to generate the display information such that a common display mode is applied for each related technical classification among the plurality of technical classifications. According to such a configuration, it is possible to easily identify the distribution of the related technical classifications of the specific applicant.

In one embodiment, the generator may be configured to generate the display information including an approximation curve that approximates the plurality of plots, and parameters representing the approximation curve. According to such a configuration, it is possible to quantitatively or trend-wise identify the characteristics of the technical portfolio of the specific applicant.

In one embodiment, when the first axis is an X-axis and the second axis is a Y-axis, the generator is configured to generate the approximation curve as a power approximation curve represented by Equation (1): Y = aX^{b} (wherein 0 < a and b < 0). According to such a configuration, the characteristics of a technical portfolio of the specific applicant can be identified quantitatively or in terms of trends.

In one embodiment, the information processing apparatus may further include a determiner configured to determine a trend of a technical portfolio of the specific applicant based on at least one of a value of a parameter a or a value of a parameter b in Equation (1), wherein the generator is configured to generate the display information including a determination result by the determiner. According to such a configuration, it is possible to more easily identify the characteristics of the technical portfolio of the specific applicant.

In one embodiment, the generator may be configured to exclude, from a target of approximation by the approximation curve, plots among the plurality of plots for which the specific evaluation value of the corresponding technical classification is less than a predetermined threshold. According to such a configuration, it is possible to quantitatively identify the characteristics of the technical portfolio by focusing on the technologies to which the specific applicant is actively pursuing.

In one embodiment, each of the plurality of technical classifications corresponds to a predetermined level of a technical category having a plurality of hierarchical levels, with lower levels of the technical category representing more detailed classifications, and when at least one of the following conditions is satisfied: the plurality of plots have ranks lower than a predetermined rank, and the plurality of plots have shares lower than a predetermined share, the generator may change the plurality of technical classifications to a lower level of the technical category, and update the display information including a plurality of plots corresponding to the changed respective technical classifications. According to such a configuration, it is possible to appropriately select a hierarchical level of the technical category that facilitates identification of the characteristics of the technical portfolio of the specific applicant.

In one embodiment, the technical category having a plurality of hierarchical levels is based on the International Patent Classification (IPC). According to such a configuration, it is possible to identify the characteristics of the technical portfolio of the specific applicant based on publicly available information that is readily accessible.

In one embodiment, the acquirer may be configured to acquire the patent information by treating one patent family as a single patent. According to such a configuration, appropriate analysis can be performed without double-counting different patents within the same family.

In one embodiment, the acquirer may be configured to acquire the patent information for a patent for which predetermined date information is included in a predetermined period. According to such a configuration, appropriate comparisons can be made even in cases where, for example, the ranks and shares fluctuate significantly over time in highly competitive technical fields.

According to another aspect of the present invention, an information processing method performed by a computer includes an acquisition step of acquiring patent information related to a plurality of patents; an identification step of identifying first information based on the patent information, the first information including: a number of patents held by each applicant for a predetermined technical classification, and a number of patents held by a specific applicant for the predetermined technical classification; and a calculation step of calculating second information based on the first information, the second information including at least one of a share or a rank of the specific applicant for the predetermined technical classification. According to such a configuration, it is possible to identify the characteristics of the technical portfolio of the specific applicant.

According to still another aspect of the present invention, a program causes a computer to execute an acquisition step of acquiring patent information related to a plurality of patents; an identification step of identifying first information based on the patent information, the first information including: a number of patents held by each applicant for a predetermined technical classification, and a number of patents held by a specific applicant for the predetermined technical classification; and a calculation step of calculating second information based on the first information, the second information including at least one of a share or a rank of the specific applicant for the predetermined technical classification. According to such a configuration, it is possible to identify the characteristics of the technical portfolio of the specific applicant.

### Advantageous Effects of Invention

According to the present invention, it is possible to provide an information processing apparatus, an information processing method, and a program that enable identification of characteristics of a technical portfolio of a specific applicant.

### Brief Description of Drawings

[FIG. 1] FIG. 1 is a schematic configuration diagram illustrating an information processing apparatus according to an embodiment.
[FIG. 2] FIG. 2 is a diagram illustrating a first configuration example of the information processing apparatus of FIG. 1.
[FIG. 3] FIG. 3 is a diagram illustrating a second configuration example of the information processing apparatus of FIG. 1.
[FIG. 4] FIG. 4 is a diagram illustrating an example of patent information.
[FIG. 5] FIG. 5 is a flowchart illustrating information processing executed by the information processing apparatus of FIG. 1.
[FIG. 6] FIG. 6 is a flowchart illustrating an example of first information identification process.
[FIG. 7] FIG. 7 is a flowchart illustrating an example of second information calculation process.
[FIG. 8] FIG. 8 is a flowchart illustrating an example of share determination process.
[FIG. 9] FIG. 9 is a flowchart illustrating an example of rank determination process.
[FIG. 10] FIG. 10 is a flowchart illustrating an example of display information generation process.
[FIG. 11] FIG. 11 is a diagram illustrating an example of a display screen.
[FIG. 12] FIG. 12 is a diagram illustrating an example of a display screen.
[FIG. 13] FIG. 13 is a diagram illustrating an example of a display screen.
[FIG. 14] FIG. 14 is a diagram illustrating an example of a display screen.

### Description of Embodiments

Embodiments of the present disclosure will be described below with reference to the accompanying drawings. In the present specification and the drawings, the same reference numerals are used to designate the same elements having substantially the same functions or the same configurations, and the repeated description is omitted.

### (Schematic Configuration of Information Processing Apparatus)

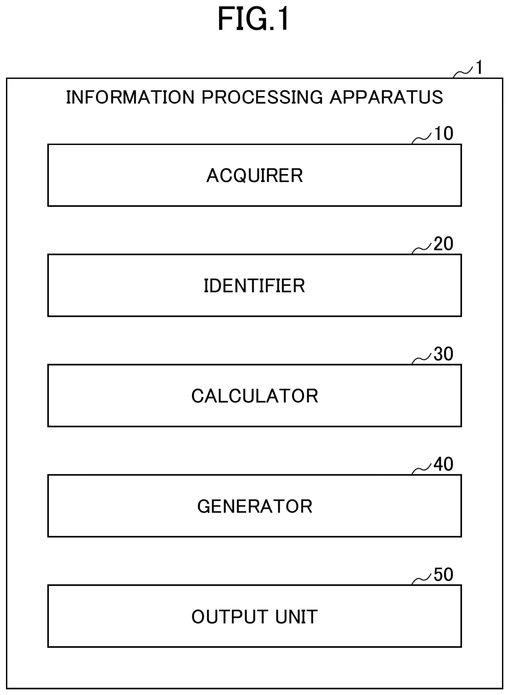

FIG. 1 is a schematic configuration diagram illustrating an information processing apparatus 1 according to the present embodiment. The information processing apparatus 1 includes an acquirer 10, an identifier 20, and a calculator 30. The information processing apparatus 1 may further include at least one of a generator 40 or an output unit 50. The acquirer 10, the identifier 20, the calculator 30, the generator 40, and the output unit 50 can be configured as functional blocks to be executed by a controller included in the information processing apparatus 1. However, the components corresponding to the functional blocks of the information processing apparatus 1 can be configured by a circuit block, a memory, or other LSIs as hardware, and can be implemented by system software, a program loaded in the memory, or the like as software. Accordingly, these functional blocks can be implemented in various forms by means of hardware only, software only, or a combination of hardware and software, and are not limited to any of the hardware only, the software only, or the combination of hardware and software.

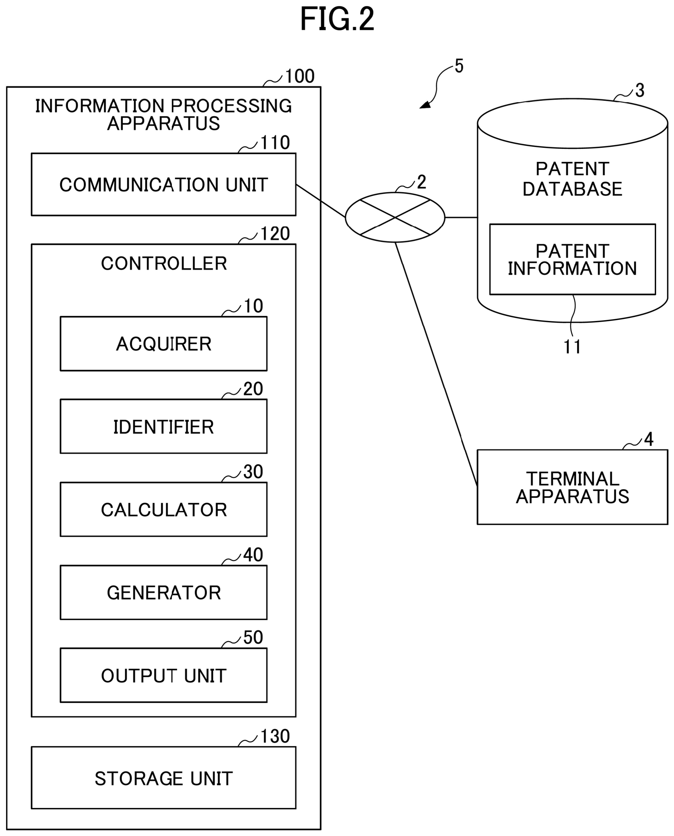

The acquirer 10 acquires patent information 11 (see, e.g., FIG. 2). The patent information 11 pertains to a plurality of published patents. In the present specification, the term "patents" may include utility models. Furthermore, "patents" are not limited to those that have been granted, but may also include pending applications. The patent information 11 may include at least one of the followings: information contained in patent gazettes issued by governmental authorities (including international organizations; hereinafter the same) of respective countries or regions, prosecution history information, trial (or appeal) information, and litigation information. The patent information 11 may also include information that has been aggregated, analyzed, or otherwise processed based on patent-related information issued by governmental authorities of respective countries or regions.

The identifier 20 identifies first information based on the patent information 11 acquired by the acquirer 10. The first information includes information related to the number of patents held by each applicant or patentee (hereinafter collectively referred to simply as "applicant") for a predetermined technical classification. The first information also includes information related to the number of patents held by a specific applicant for the predetermined technical classification. The predetermined technical classification may be a single classification or a plurality of classifications. When the predetermined technical classification includes a plurality of technical classifications, the first information may include information related to the number of patents held by each applicant for each of the plurality of predetermined technical classifications, and the number of patents held by the specific applicant for each of the plurality of technical classifications. Further, the first information may include information related to the total number of patents held by a plurality of applicants for each of the plurality of technical classifications. The total number of patents held by the plurality of applicants for the predetermined technical classification can be identified based on the number of patents per applicant. Hereinafter, the aforementioned "plurality of applicants" may be referred to, for convenience, as the "applicant population."

Here, the specific applicant is the applicant to be analyzed. The specific applicant is one or more applicants selected from among the applicant population, and may be a single applicant or two or more applicants. For example, in the case where the same applicant is treated as a different applicant in the patent information 11 due to differences in notation, or in the case where two or more applicants included in the same group company are to be collectively analyzed as one applicant to be analyzed, two or more applicants can be set as a single specific applicant. The specific applicant may be set in advance, may be set when the information processing apparatus 1 executes information processing described later, or may be a combination of these. The applicant population may include all applicants or only a part of the applicants included in the patent information 11. When the applicant population includes only a part of the applicants included in the patent information 11, such part of the applicants may be set in advance or may be set when the information processing apparatus 1 executes the information processing to be described later.

The predetermined technical classification may be set in advance, may be set at the time the information processing apparatus 1 executes the information processing described later, or may be set as a combination thereof. In a first example, the predetermined technical classification may include all technical classifications related to the patents of the specific applicant included in the patent information 11. In this case, the calculator 30 calculates the second information, described later, for all technical classifications related to the patents of the specific applicant included in the patent information 11. After the second information is calculated, part of the predetermined technical classification may be further selected or identified. Alternatively, after calculating the second information, the generator 40 may generate display information for all or part of the predetermined technical classification. In a second example, the predetermined technical classification may include technical classifications related to the patents of the specific applicant included in the patent information 11 and may be selected or identified at the time the information processing apparatus 1 executes the information processing described later. In either the first or second example, the selection or identification of the predetermined technical classification may be: a selection or identification of technical classifications in which the share of the specific applicant is high among the applicant population; a selection or identification of technical classifications in which the share of the specific applicant is high among the technical classifications of that specific applicant; a selection or identification of technical classifications in which the number of patents held by the specific applicant is high among the technical classifications of that specific applicant; or a selection or identification based on user operation or the like.

When identifying the first information, the identifier 20 may extract the technical classification directly from the patent information 11, or may generate a technical classification based on the patent information 11. When the technical classification is directly extracted from the patent information 11, the identifier 20 may extract patent classification information described in the patent gazette of each patent included in the patent information 11 as the technical classification. The patent classification information is, for example, the International Patent Classification (IPC, hereinafter, also referred to as "IPC"), Cooperative Patent Classification (CPC), File Index (FI), and F-term. The patent classification information may be a unique classification used in various commercial databases. When the technical classification is generated based on the patent information 11, the identifier 20 may generate the technical classification by text mining using machine learning from the contents described in the patent gazette of each patent included in the patent information 11. Alternatively, the patent information 11 may include information on a technical classification generated in advance by text mining using machine learning from the contents described in the patent gazette of each patent. In this case, the identifier 20 can directly extract the pre-generated technical classification from the patent information 11.

Each patent included in the patent information 11 may include a single technical classification or a plurality of technical classifications. When each patent included in the patent information 11 includes a plurality of technical classifications, the identifier 20 may select one representative technical classification from among the plurality of technical classifications included in the patent. One representative technical classification may be, for example, the primary IPC.

The calculator 30 calculates the second information based on the first information identified by the identifier 20. The second information includes information on the share and/or the rank of the specific applicant for a predetermined technical classification. In the case where there are a plurality of predetermined technical classifications, the second information may include information on at least one of the share or the rank of the specific applicant for each of the plurality of technical classifications. The details of the share and the rank will be described later.

When the information processing apparatus 1 includes the output unit 50, the output unit 50 outputs the second information calculated by the calculator 30. The output unit 50 may output at least a part of the patent information 11 and the first information in addition to the second information. The output unit 50 can output the output information in the form of display information described later, or in the form of information suitable for any information transmission method such as voice information, print information, etc.

When the information processing apparatus 1 includes the generator 40, the generator 40 generates display information. In this case, the output unit 50 may output the display information generated by the generator 40 as the second information. The generator 40 may generate display information including the first information in addition to the second information. The generator 40 may generate display information including a plurality of plots arranged at respective positions in a coordinate system with a first axis representing a rank and a second axis representing a share, each of the plurality of plots corresponding to one of the plurality of technical classifications for the specific applicant.

As described above, the information processing apparatus 1 includes an acquirer 10 configured to acquire patent information 11 related to a plurality of patents; an identifier 20 configured to identify first information, based on the patent information 11, the first information including information on the number of patents held by each applicant for a predetermined technical classification, and the number of patents held by the specific applicant for the predetermined technical classification; and a calculator 30 configured to calculate second information based on the first information, the second information including information related to at least one of a share or a rank of the specific applicant for the predetermined technical classification. With such a configuration, it is possible to output information that enables identification of trends and positioning of the specific applicant in comparison with other applicants in relation to the technologies owned by the specific applicant, thereby enabling identification of the characteristics of the characteristics of the technical portfolio of the specific applicant.

### (First Configuration Example of Information Processing Apparatus)

FIG. 2 is a diagram illustrating an information processing apparatus 100 as a first configuration example of the information processing apparatus 1. The information processing apparatus 100 is connected to a patent database 3 and a terminal apparatus 4 via the network 2. The information processing apparatus 100, the patent database 3, and the terminal apparatus 4 collectively constitute an information processing system 5. The information processing system 5 is an example in which the information processing apparatus 100 functions as a server and the terminal apparatus 4 outputs display information.

The network 2 includes the Internet, at least one wide area network (WAN), at least one metropolitan area network (MAN), at least one wireless network, at least one optical network, or any combination these networks. The wireless network is, for example, an ad-hoc network, a cellular network, a wireless local area network (LAN), a satellite communications network, or a terrestrial microwave network.

The information processing apparatus 100 includes a communication unit 110, a controller 120, and a storage unit 130.

The communication unit 110 includes at least one communication interface. The communication interface may correspond to any communication standard, for example, a wired LAN standard, a wireless LAN standard, or a mobile communication standard. The communication unit 110 receives data used for operations of the information processing apparatus 100 and transmits data obtained by operations of the information processing apparatus 100. Specifically, the communication unit 110 receives the patent information 11 from the patent database 3 via the network 2. More specifically, the communication unit 110 transmits the second information and the like output from the output unit 50 to the terminal apparatus 4 via the network 2.

The controller 120 includes at least one processor, at least one programmable circuit, at least one dedicated circuit, or any combination these circuits. The processor is a general-purpose processor such as a central processing unit (CPU) or a graphics processing unit (GPU), or a processor specialized for a specific processing. The programmable circuit is, for example, a field-programmable gate array (FPGA). The dedicated circuit is, for example, an ASIC (application specific integrated circuit). The controller 120 executes processing related to operations of the information processing apparatus 100 while controlling each unit of the information processing apparatus 100.

The controller 120 executes the functions of the acquirer 10, the identifier 20, the calculator 30, the generator 40, and the output unit 50. The details of the functions of the acquirer 10, the identifier 20, the calculator 30, the generator 40, and the output unit 50 are as described above.

The storage unit 130 is a storage device such as a HDD (hard disk drive) or a flash memory. The storage unit 130 may be a storage device built in the information processing apparatus 100, or an external storage device connected to the information processing apparatus 100 by a universal serial bus (USB) or the like. The storage unit 130 stores data and programs used for information processing executed by the information processing apparatus 100. The storage unit 130 may store information on the specific applicant to be analyzed in advance.

The patent database 3 stores information related to patents including patent information 11. The patent database 3 may be a database maintained by a public institution, a commercial database, or a combination of these. The patent database 3 transmits the patent information 11 to the information processing apparatus 100 via the network 2 in response to a request from the information processing apparatus 100. The information processing apparatus 100 stores the patent information 11 transmitted from the patent database 3 in the storage unit 130. In the case where the patent database 3 is a commercial database, the patent database 3 may be a component of the information processing apparatus 100.

The terminal apparatus 4 is a computer having a communication function, and may be, for example, a PC (personal computer), a smartphone, a tablet terminal, or the like. The terminal apparatus 4 includes a display unit, receives display information transmitted from the information processing apparatus 100 via the network 2, and displays a video image based on the received display information on the display unit. The terminal apparatus 4 may include an input unit such as a keyboard or a touch panel, and may transmit an information processing execution request to the information processing apparatus 100 based on a command input through the input unit, and may receive display information or the like as an execution result of the information processing. The terminal apparatus 4 may transmit information on the specific applicant to the information processing apparatus 100 based on the designation information of the specific applicant input through the input unit.

### (Second Configuration Example of Information Processing Apparatus)

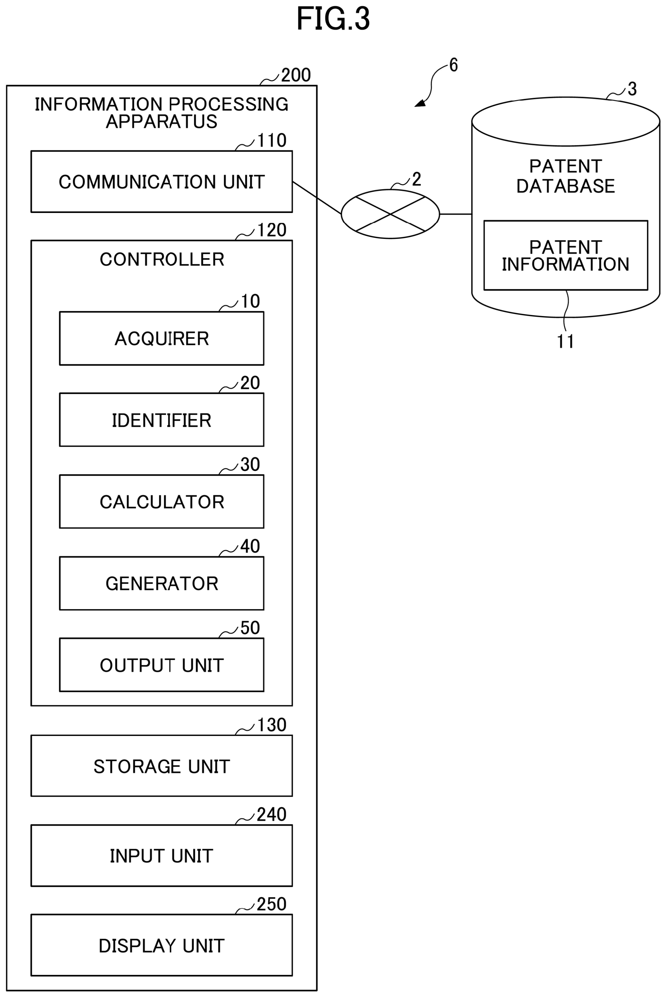

FIG. 3 is a diagram illustrating an information processing apparatus 200 as a second configuration example of the information processing apparatus 1. The information processing apparatus 200 is connected to the patent database 3 via the network 2. The information processing apparatus 200 and the patent database 3 constitute an information processing system 6 as a whole. The information processing system 6 is a configuration example where display information is output to the information processing apparatus 200.

The information processing apparatus 200 includes a communication unit 110, a controller 120, a storage unit 130, an input unit 240, and a display unit 250.

The input unit 240 includes at least one input interface. The input interface is, for example, a physical key, a capacitance key, a pointing device, a touch screen provided integrally with the display unit 250, a camera, a LiDAR (Light Detection and Ranging, or Laser Imaging Detection and Ranging), or a microphone. The input unit 240 receives an operation for inputting data used for operations of the information processing apparatus 200. The input unit 240 may be connected to the information processing apparatus 200 as an external input device instead of being provided in the information processing apparatus 200. As the connection interface, for example, an interface corresponding to a standard such as USB (Universal Serial Bus) or Bluetooth (registered trademark) can be used.

The input unit 240 may transmit an input command to the controller 120 triggering the controller 120 to execute information processing. The input unit 240 may cause the controller 120 to execute information processing using the input information on the specific applicant.

The display unit 250 is, for example, a liquid crystal display (LCD) or an organic electroluminescent (EL) display. The display unit 250 displays a video image based on the display information output from the output unit 50.

### (Example of Patent Information)

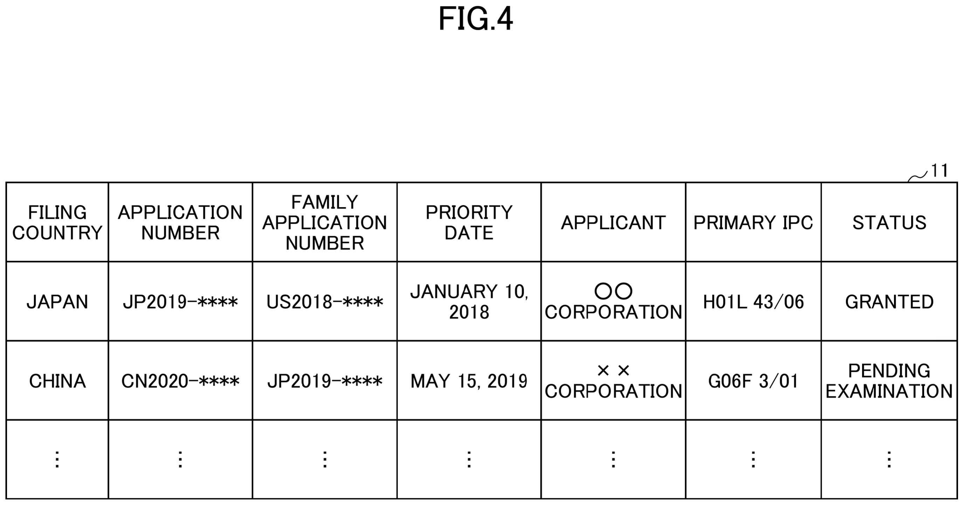

FIG. 4 is a diagram illustrating an example of the patent information 11. As illustrated in FIG. 4, the patent information 11 is information in which, for example, the filing country, the application number, the family application number, the priority date, the applicant, the primary IPC, and the status are associated with each of a plurality of patents.

The filing country is information indicating the country or region where a patent has been filed. The application number is an example of the identification information of the patent. The patent identification information may be the application number, publication number, patent number, etc. The family application number is an example of the identification of a patent family. The priority date is an example of the predetermined date information to which the patent belongs. The predetermined date information may be the filing date, the publication date, the grant date, the granted publication date, etc., in addition to the priority date. The applicant is information that collectively indicates the applicant or the patent right holder, as described above. The primary IPC is an example of patent classification information used as the technical classification of the patent and is the IPC granted as the representative of one or more IPCs granted for the patent. The status is information indicating the examination status, maintenance status, and the like of the patent.

The patent information 11 may include only one of a plurality of patents belonging to the same patent family. In other words, the acquirer 10 may acquire the patent information 11 by treating one patent family as a single patent. The patent information 11 may be information on patents of a plurality of countries or regions, or information on a patent of a specific country or region.

The patent information 11 may be information on patents in which predetermined date information falls within a predetermined period. In other words, the acquirer 10 may acquire the patent information 11 for patents in which predetermined date information falls within the predetermined period.

### (Information Processing Executed by Information Processing Apparatus)

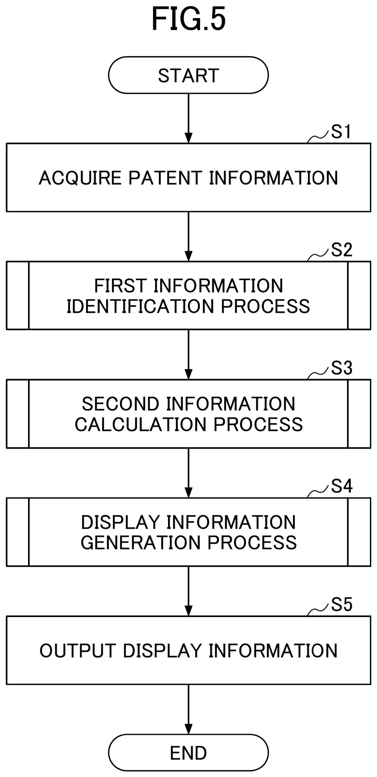

FIG. 5 is a flowchart illustrating the information processing executed by the information processing apparatus 1. The acquirer 10 acquires the patent information 11 (step S1).

The identifier 20 identifies the first information based on the patent information 11 acquired by the acquirer 10 (step S2). The process of step S2 is referred to as a first information identification process, and will be described in detail later.

The calculator 30 calculates the second information based on the first information identified by the identifier 20 (step S3). The process of step S3 is referred to as a second information calculation process, and will be described in detail later.

The generator 40 generates display information based on the second information (step S4). The process of step S4 is referred to as a display information generation process, and will be described in detail later.

The output unit 50 outputs the display information generated based on the second information (step S5).

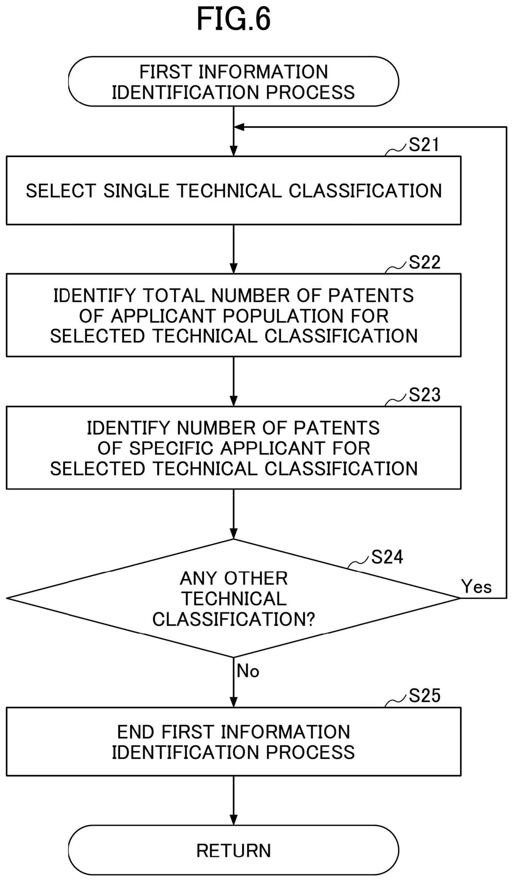

FIG. 6 is a flowchart illustrating an example of a first information identification process executed by the identifier 20. The identifier 20 selects a single technical classification from the patent information 11 acquired by the acquirer 10 in step S1 (step S21).

The identifier 20 identifies the total number of patents of the applicant population included in the patent information 11 for the technical classification selected in step S21 (step S22).

The identifier 20 identifies the number of patents of the specific applicant included in the patent information 11 for the technical classification selected in step S21 (step S23).

The identifier 20 determines whether or not there is any other technical classification other than the technical classification already selected in step S21 in the patent information 11 (step S24). When it is determined that there is any other technical classification (Yes in step S24), the identifier 20 returns to the process of step S21. When it is determined that there is no other technical classification, that is, the processes of steps S22 and S23 have been executed for all the technical classifications (No in step S24), the identifier 20 proceeds to the process of step S25.

The identifier 20 completes the identification of the first information including the information on the total number of patents identified in step S22 and the information on the number of patents identified in step S23, and ends the first information identification process (step S25).

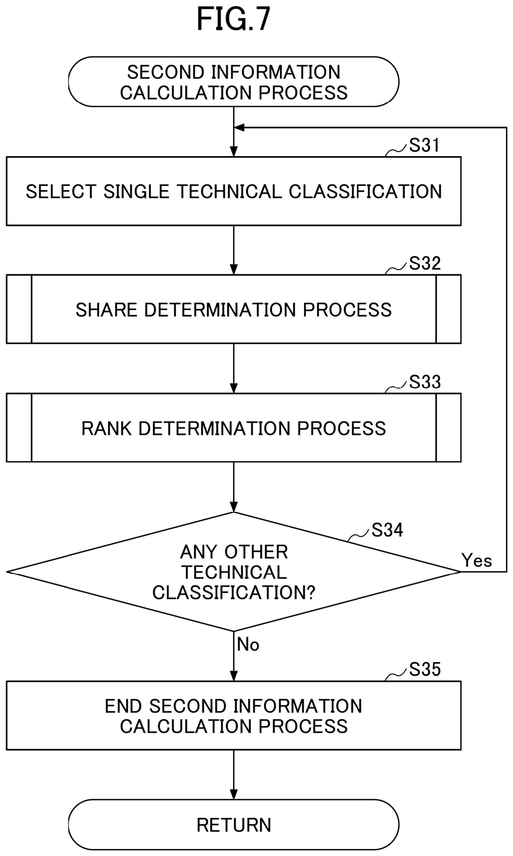

FIG. 7 is a flowchart illustrating an example of a second information calculation process executed by the calculator 30. The calculator 30 selects a single technical classification from the patent information 11 or the first information identified by the identifier 20 (step S31).

The calculator 30 determines the share of the specific applicant in the applicant population for the technical classification selected in step S31 (step S32). The process of step S32 is referred to as a share determination process, and will be described in detail later.

The calculator 30 determines the rank of the specific applicant in the applicant population for the technical classification selected in step S31 (step S33). The process of step S33 is referred to as a rank determination process, and will be described in detail later.

The calculator 30 determines whether or not there is any technical classification other than the technical classification already selected in step S31 in the patent information 11 (step S34). When it is determined that there is any other technical classification (Yes in step S34), the calculator 30 returns to the process of step S31. When it is determined that there is no other technical classification, that is, the processing of step S32 and step S33 has been executed for all the technical classifications (No in step S34), the calculator 30 proceeds to the processing of step S35.

The calculator 30 completes the calculation of the second information including the information on the share determined in step S32 and the information on the rank determined in step S33, and ends the second information calculation process (step S35).

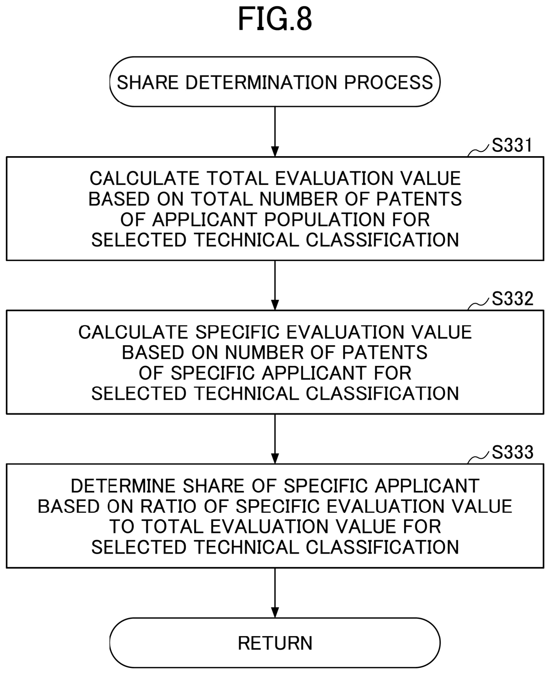

FIG. 8 is a flowchart illustrating an example of a share determination process executed by the calculator 30. The calculator 30 calculates a total evaluation value based on the total number of patents of the applicant population for the technical classification selected in step S31 (step S331). The total evaluation value is an indicator for evaluating a value of a group of patents of the applicant population for a certain technical classification, and is obtained by multiplying the average score of each patent calculated according to a predetermined rule by the total number of patents of the applicant population. The score of each patent can be determined by a known method for calculating the patent score, and can be determined by comprehensively considering the number of times the document is used as a cited document in the examination, the number of times the information is provided, the presence or absence of foreign applications, and the like. For simplicity, the total evaluation value may be determined based only on the number of patents without using the score of each patent.

The calculator 30 calculates a specific evaluation value based on the number of patents of the specific applicant for the technical classification selected in step S31 (step S332). Here, the specific evaluation value is an indicator for evaluating a value of a group of patents of the specific applicant for a certain technical classification, and is obtained by multiplying the average score of each patent calculated according to a predetermined rule by the number of patents of the specific applicant. The score of each patent used to calculate the specific evaluation value may be the same as that used for the total evaluation value. For simplicity, the specific evaluation value may be determined based only on the number of patents without using the score of each patent.

The calculator 30 determines the share of the specific applicant in the applicant population based on the ratio of the specific evaluation value to the total evaluation value for the technical classification selected in step S31, and ends the share determination process (step S333). In detail, the share of the specific applicant may be a value obtained by dividing the specific evaluation value by the total evaluation value.

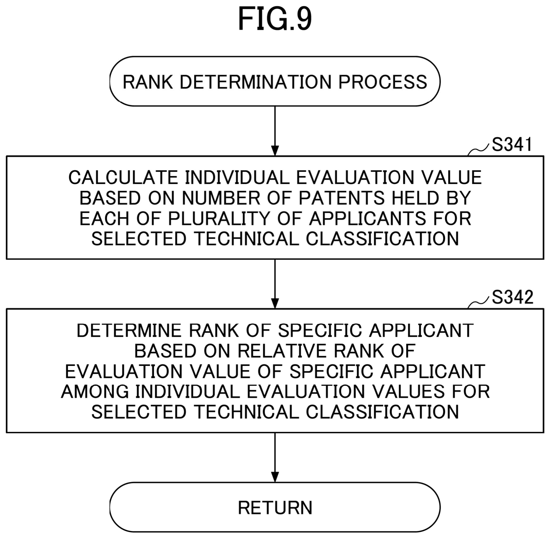

FIG. 9 is a flowchart illustrating an example of a rank determination process executed by the calculator 30. The calculator 30 calculates an individual evaluation value based on the number of patents held by each of the plurality of applicants included in the applicant population for the technical classification selected in step S31 (step S341). Here, the individual evaluation value is an indicator for evaluating a value of a group of patents of each of the plurality of applicants for a certain technical classification, and is obtained by multiplying the average score of each patent calculated according to a predetermined rule by the number of patents held by each of the plurality of applicants. The score of each patent used to calculate the individual evaluation value may be the same as that used for the total evaluation value. For simplicity, the individual evaluation value may be determined based only on the number of patents without using the score of each patent.

The calculator 30 determines the rank of the specific applicant based on the relative rank of the evaluation value of the specific applicant (synonymous with the specific evaluation value calculated in step S341) among the individual evaluation values calculated in step S332 in the applicant population, for the technical classification selected in step S31 (step S342). The rank of the specific applicant indicates how high their evaluation value is compared to other applicants in the applicant population. The calculator 30 may calculate the share of each of the plurality of applicants included in the applicant population, and determine the rank of the share of the specific applicant in the applicant population as the rank of the specific applicant.

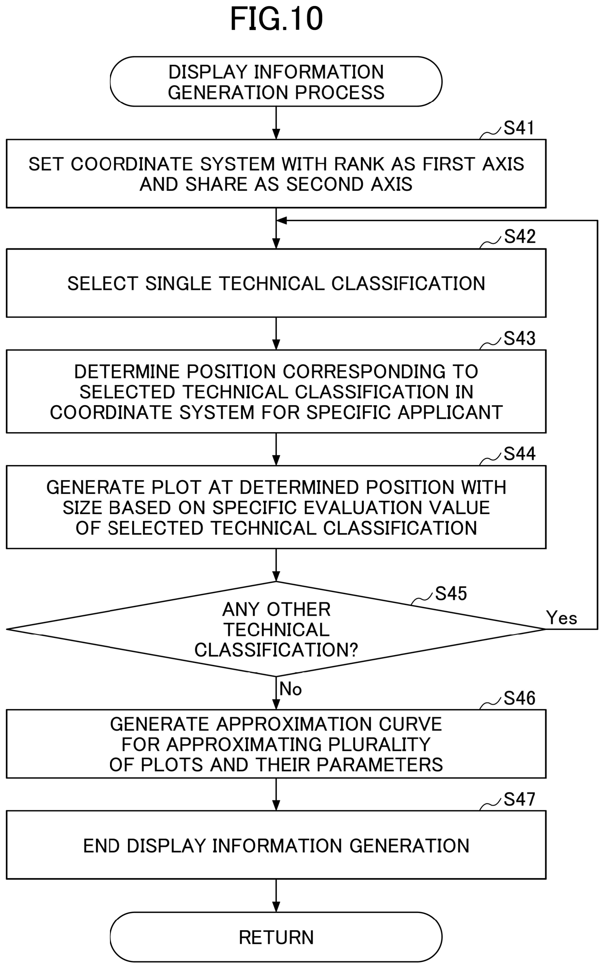

FIG. 10 is a flowchart illustrating an example of the display information generation process executed by the generator 40. The generator 40 sets a coordinate system with the rank being set as a first axis and the share being set as a second axis (step S41).

The generator 40 selects a single technical classification from the second information calculated by the calculator 30 (step S42).

The generator 40 determines a position corresponding to the technical classification selected in step S42 in the coordinate system set in step S41 for the specific applicant (step S43).

The generator 40 generates a plot at the position determined in step S43 with a size based on the specific evaluation value of the technical classification selected in step S42 (step S44). The higher the specific evaluation value of the technical classification selected in step S42, the larger the plot size is to be set. The shape of the plot is not particularly limited, but may be, for example, a circular shape.

The generator 40 determines whether or not the second information includes any technical classification other than the technical classification already selected in step S41 (step S45). When it is determined that there is another technical classification (Yes in step S45), the generator 40 returns to the process of step S41. When it is determined that there is no other technical classification, that is, the processes of steps S43 and S44 have been executed for all the technical classifications (No in step S45), the generator 40 proceeds to the process of step S46.

The generator 40 generates an approximation curve that approximates the plurality of plots determined in step S44 and their parameters (step S46).

The generator 40 generates display information including the plot generated in step S44, the approximation curve and the parameters generated in step S46, in the coordinate system set in step S41, and ends the display information generation process (step S47).

As described above, the information processing apparatus 1 executes information processing according to the flowcharts of FIGS. 5 to 10.

### (Display Screen Example)

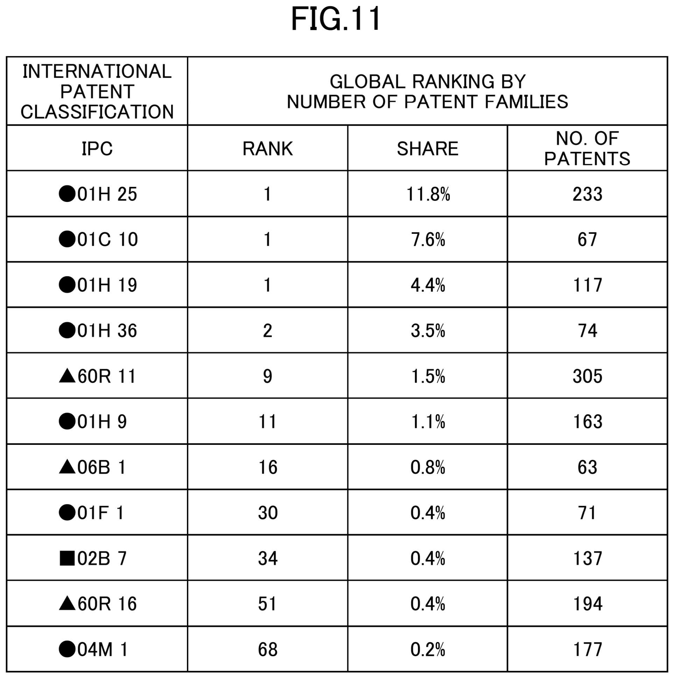

FIGS. 11 to 14 are diagrams illustrating examples of display screens. The display screens illustrated in FIGS. 11 to 14 are examples of screens displayed by the display unit of the terminal apparatus 4 illustrated in FIG. 2, the display unit 250 of the information processing apparatus 200 illustrated in FIG. 3, and the like. In the display screens illustrated in FIGS. 11 to 14, the IPC is such that the section of the alphabet of the first letter is replaced with a symbol, and the same symbol indicates the same alphabet.

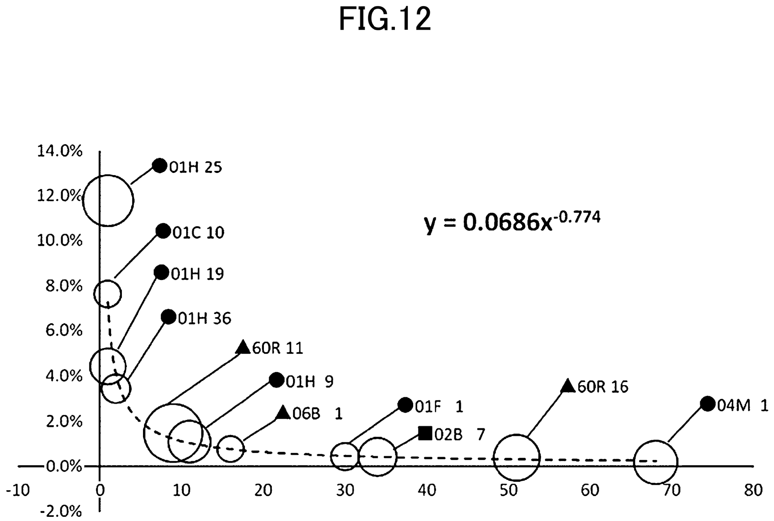

The display screens illustrated in FIGS. 11 and 12 are displayed based on display information that includes part of the information related to an applicant A who is a specific applicant, among the patent information 11, the first information, and the second information. The patent information 11 used in FIGS. 11 and 12 is information about patents in countries around the world, and the number of patents is the number of patent families in which one patent family is counted as one patent.

FIG. 11 is a display screen illustrating a rank, a share, and the number of patents for each of a plurality of technical classifications (here, IPC) for the applicant A in a table. The display screen illustrated in FIG. 11 is sorted in descending order of share. In other words, the higher the share of the technical classification, the higher the position in the table displayed on the display screen. This enables identification of the characteristics of the technical portfolio of the specific applicant.

FIG. 12 is a display screen illustrating a graph in which the rank, the share, and the number of patents for each of a plurality of technical classifications (here, IPC) are plotted for the applicant A. More specifically, the display screen illustrated in FIG. 12 includes a plurality of plots in which a plurality of technical classifications of the applicant A are arranged at positions corresponding to each other in a coordinate system in which the rank is set as a horizontal axis (X-axis, first axis) and the share is set as a vertical axis (Y-axis, second axis). Each of the plurality of plots is displayed larger as the number of patents in the corresponding technical classification increases. This facilitates visual identification of the position of each technical classification for the specific applicant.

In the display screen illustrated in FIG. 12, an approximation curve that approximates a plurality of plots is indicated by broken line. In detail, the approximation curve is a power approximation curve represented by the following Equation (1): Y = aX^{b} (where 0 < a and b < 0, and both a and b are real numbers). Also, parameters a and b representing the approximation curve are displayed. In the example illustrated in FIG. 12, the entire approximation formula including parameters a and b is displayed. The approximation curve can be determined, for example, by the least squares method. This enables quantitative identification of the characteristics of a technical portfolio of the specific applicant.

The generator 40 may generate display information such that a common display mode is applied for each of highly related (relevant) technical classifications among a plurality of technical classifications. The display screens illustrated in FIGS. 11 and 12 may optionally include a plurality of technical classification groups, each including one or more technical classifications that are highly related to each other, and the respective technical classification groups may be distinguishably displayed using different colors, fonts, or the like. For example, when a technical classification corresponds to a predetermined hierarchical level of a technical category having a plurality of hierarchical levels, classifications that share a common higher hierarchical level classification may be grouped into the same technical classification group. In the example illustrated in FIGS. 11 and 12, IPC codes "•01H25" and "•01H19" represent different technical classifications; however, their immediate higher-level classification is the same IPC category "•01H," and therefore, they can be grouped into the same technical classification group. Further, for example, technical classification groups may be predefined based on a custom classification standard that differs from the hierarchical structure of the technical classifications. This allows for easier understanding of the distribution of closely related technical classifications for a specific applicant.

Here, the hierarchical structure of the IPC will be briefly described as an example of a hierarchical structure of the technical classification. The IPC has a hierarchical structure, with sections, classes, subclasses, main groups and subgroups in that order from the highest. The section is represented by a single initial letter. The class is represented by two digits following the section. The subclasses is represented by a one letter alphabet following the class. The main group is expressed by a number of four digits or less following the subclass. the subgroup is represented by a number of two or more via a slash ("/") following the main group. In the examples illustrated in FIGS. 11 and 12, "•01H25" and "•01H19" are both main group hierarchical levels, and "•01H" is a subclass hierarchical level.

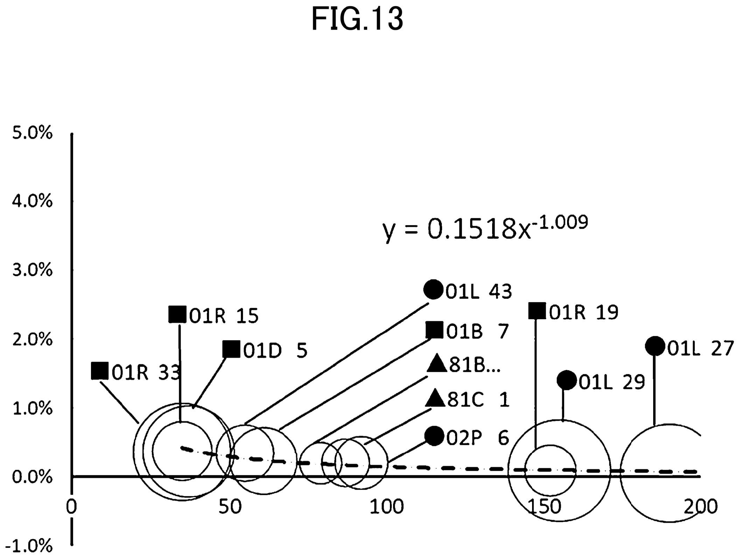

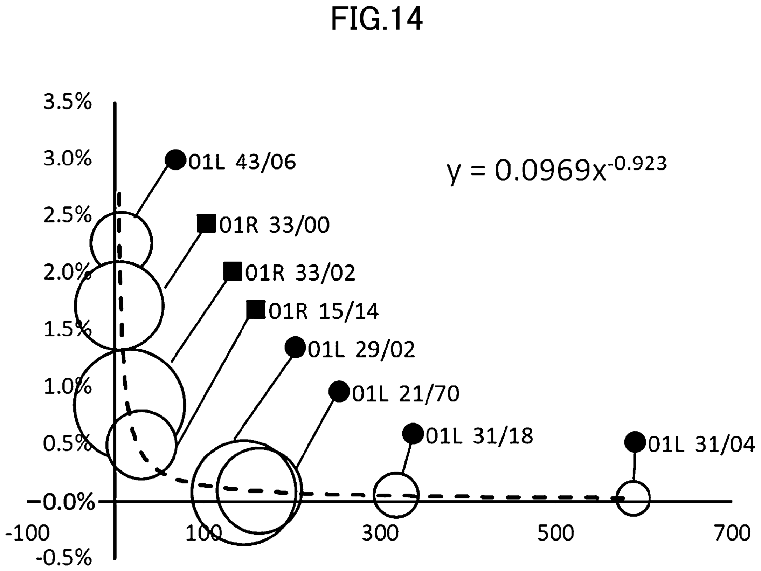

The display screens illustrated in FIGS. 13 and 14 are displayed based on the display information including part of the information related to an applicant B who is a specific applicant, among the patent information 11, the first information, and the second information. Since FIGS. 13 and 14 are display screens in which the applicant B is plotted in the same coordinate system as that of FIG. 12, the same items as those of FIG. 12 are not described.

FIG. 13 illustrates an example in which a main group hierarchical level of a technical category having a plurality of hierarchical levels included in the IPC (International Patent Classification) is used as the technical classification. In the example illustrated in FIG. 13, there is no technical classification in which a rank of the applicant B is within the top 30, nor any technical classification in which a share is equal to or greater than 0.5%. Accordingly, from FIG. 13, it appears difficult to identify the technical fields in which the applicant B has a competitive strength.

FIG. 14 illustrates an example in which a subgroup hierarchical level of the technical category having a plurality of hierarchical levels included in the IPC is used as the technical classification, where the subgroup hierarchical level is lower than the main group hierarchical level, and represents a more detailed classification. In the example illustrated in FIG. 14, there are technical classifications in which a rank of the applicant B is within the top 10 and there are also technical classifications in which a share is 2% or more. In other words, from FIG. 14, it appears easy to identify the technical classifications that represent the strength of applicant B. In the example illustrated in FIG. 14, the relationship between the rank and the share is more easily identified compared to the example illustrated in FIG. 13, and the characteristics of the technical portfolio of the applicant B are more easily identified.

Also, FIGS. 13 and 14 indicate that applicant B has strength in more detailed technical classifications. This indicates that applicant B may not have strength in a certain technical field in general, but may have strength in a specific limited technical field. Furthermore, FIG. 14 indicate that applicant B has relatively high rank and share, and has strength with respect to a plurality of technical classifications at lower hierarchical levels of IPC "■01R". As described above, the information processing apparatus 1 according to the present embodiment can analyze a technical portfolio of the specific applicant from various perspectives.

When at least one of the following conditions is satisfied: the plurality of plots have ranks lower than a predetermined rank; and the plurality of plots have shares lower than a predetermined share, the generator 40 may change the plurality of technical classifications to a lower level of the technical category, and update the display information including a plurality of plots corresponding to the changed respective technical classifications. For example, when at least one of the followings is satisfied: the plurality of plots have ranks lower than 30; and the plurality of plots have shares lower than 0.5%, the generator 40 changes the plurality of technical classifications to a lower level of the technical category, and updates the display information including a plurality of plots corresponding to the changed respective technical classifications, whereby the display screen illustrated in FIG. 13 can be updated to the display screen illustrated in FIG. 14.

The present disclosure is not limited to the configuration identified in the above-described embodiments, and various modifications are possible.

For example, the information processing apparatus 1 may further include a determiner. The determiner determines a trend of a technical portfolio of the specific applicant based on at least one of a value of a parameter a or a value of a parameter b in Equation (1). The generator 40 generates display information including a determination result obtained by the determiner. With this configuration, it is possible to more easily identify the characteristics of the technical portfolio of the specific applicant.

Specifically, for example, the larger the absolute value of the parameter b, the steeper the rise of the approximation curve tends to be. By utilizing this tendency, if the absolute value of the parameter b is equal to or greater than a predetermined threshold, it can be determined that the specific applicant is more concentrated in some technologies. Further, the larger the absolute value of the parameter a, the higher the share in the technical classification of the higher rank. By utilizing this tendency, if the absolute value of the parameter a is equal to or greater than a predetermined threshold, it can be determined that the specific applicant has a high market share in some technologies. This information can be used as an indicator for comparative analysis between the company and other companies and for selection of other companies to collaborate with.

The generator 40 may also exclude, from a target of approximation by the approximation curve, plots among the plurality of plots for which the specific evaluation value of the corresponding technical classification is less than a predetermined threshold. This makes it possible to perform analysis only in the technical field to which the specific applicant has devoted more than a certain amount of effort, and thus enables analysis according to the purpose.

The patent information 11 may include all patents of a technical classification in which the specific applicant has a high rank. This makes it possible to compare the number of patents held by the specific applicant with the number of all patents of the technical classification, and thus to calculate the share and the rank more accurately.

The following clauses are disclosed with respect to the above embodiments.

### (Clause 1)

An information processing apparatus including:
an acquirer configured to acquire patent information related to a plurality of patents;
an identifier configured to identify first information based on the patent information, the first information including:
   a number of patents held by each applicant for a predetermined technical classification, and
   a number of patents held by a specific applicant for the predetermined technical classification; and
a calculator configured to calculate second information based on the first information, the second information including at least one of a share or a rank of the specific applicant for the predetermined technical classification.

### (Clause 2)

The information processing apparatus according to Clause 1, wherein the calculator is configured to calculate, as the second information, information including the share and the rank of the specific applicant.

### (Clause 3)

The information processing apparatus according to Clause 2, wherein, when the predetermined technical classification includes a plurality of classifications, the identifier is configured to identify, as the first information, information including, for each of the plurality of technical classifications, the number of patents held by each applicant and the number of patents held by the specific applicant.

### (Clause 4)

The information processing apparatus according to Clause 3, further including:
an output unit configured to output the second information.

### (Clause 5)

The information processing apparatus according to Clause 3, wherein the calculator is configured to:
calculate, for each of the plurality of technical classifications, a total evaluation value based on a total number of patents held by the plurality of applicants;
calculate, for each of the plurality of technical classifications, a specific evaluation value based on the number of patents held by the specific applicant; and
determine, for each of the plurality of technical classifications, a share of the specific applicant, based on a ratio of the specific evaluation value to the total evaluation value.

### (Clause 6)

The information processing apparatus according to any one of Clauses 3 to 5, wherein the calculator is configured to:
calculate, for each of the plurality of technical classifications, an individual evaluation value based on the number of patents held by each of the plurality of applicants; and
determine, for each of the plurality of technical classifications, a rank of the specific applicant, based on a relative rank of a corresponding evaluation value of the specific applicant among the individual evaluation values.

### (Clause 7)

The information processing apparatus according to Clause 4, further including:
a generator configured to generate display information including a plurality of plots arranged at respective positions in a coordinate system with a first axis representing the rank and a second axis representing the share, each of the plurality of plots corresponding to one of the plurality of technical classifications for the specific applicant,
wherein the output unit is configured to output the display information as the second information.

### (Clause 8)

The information processing apparatus according to Clause 7,
wherein the calculator is configured to calculate a specific evaluation value based on the number of patents held by the specific applicant for each of the plurality of technical classifications, and
wherein the generator is configured to generate the display information such that each of the plurality of plots has a size based on the specific evaluation value of the corresponding technical classification.

### (Clause 9)

The information processing apparatus according to Clause 7 or 8, wherein the generator is configured to generate the display information such that a common display mode is applied for each related technical classification among the plurality of technical classifications.

### (Clause 10)

The information processing apparatus according to any one of Clauses 7 to 9, wherein the generator is configured to generate the display information including an approximation curve that approximates the plurality of plots, and parameters representing the approximation curve.

### (Clause 11)

The information processing apparatus according to Clause 10, wherein, when the first axis is an X-axis and the second axis is a Y-axis, the generator is configured to generate the approximation curve as a power approximation curve represented by Equation (1): Y = aX^{b} (wherein 0 < a and b < 0).

### (Clause 12)

The information processing apparatus according to Clause 11, further including:
a determiner configured to determine a trend of a technical portfolio of the specific applicant based on at least one of a value of a parameter a or a value of a parameter b in Equation (1),
wherein the generator is configured to generate the display information including a determination result by the determiner.

### (Clause 13)

The information processing apparatus according to any one of Clauses 10 to 12,
wherein the calculator is configured to calculate, for each of the plurality of technical classifications, a specific evaluation value based on the number of patents held by the specific applicant, and
wherein the generator is configured to exclude, from a target of approximation by the approximation curve, plots among the plurality of plots for which the specific evaluation value of the corresponding technical classification is less than a predetermined threshold.

### (Clause 14)

The information processing apparatus according to any one of Clauses 7 to 13,
wherein each of the plurality of technical classifications corresponds to a predetermined level of a technical category having a plurality of hierarchical levels, with lower levels of the technical category representing more detailed classifications, and
wherein, when at least one of the following conditions is satisfied:
   the plurality of plots have ranks lower than a predetermined rank, and
   the plurality of plots have shares lower than a predetermined share,
the generator changes the plurality of technical classifications to a lower level of the technical category, and updates the display information including a plurality of plots corresponding to the changed respective technical classifications.

### (Clause 15)

The information processing apparatus according to Clause 14, wherein the technical category having a plurality of hierarchical levels is based on the International Patent Classification (IPC).

### (Clause 16)

The information processing apparatus according to any one of Clauses 1 to 15, wherein the acquirer is configured to acquire the patent information by treating one patent family as a single patent.

### (Clause 17)

The information processing apparatus according to any one of Clauses 1 to 16, wherein the acquirer is configured to acquire the patent information for patents in which predetermined date information falls within a predetermined period.

### (Clause 18)

An information processing method performed by a computer, the information processing method including:
an acquisition step of acquiring patent information related to a plurality of patents;
an identification step of identifying first information based on the patent information, the first information including:
   a number of patents held by each applicant for a predetermined technical classification, and
   a number of patents held by a specific applicant for the predetermined technical classification; and
a calculation step of calculating second information based on the first information, the second information including at least one of a share or a rank of the specific applicant for the predetermined technical classification.

### (Clause 19)

A program causing a computer to execute:
an acquisition step of acquiring patent information related to a plurality of patents;
an identification step of identifying first information based on the patent information, the first information including:
   a number of patents held by each applicant for a predetermined technical classification, and
   a number of patents held by a specific applicant for the predetermined technical classification; and
a calculation step of calculating second information based on the first information, the second information including at least one of a share or a rank of the specific applicant for the predetermined technical classification.

### [Industrial applicability]

The present disclosure relates to an information processing apparatus, an information processing method, and a program for executing information processing based on patent information.

The present international application claims priority under Japanese patent application 2023-005763 filed on January 18, 2023, the entire contents of which are incorporated by reference herein.

### Reference Signs List

- 1, 100, 200:: information processing apparatus
- 2:: network
- 3:: patent database
- 4:: terminal apparatus
- 5, 6:: information processing system
- 10:: acquirer
- 11:: patent information
- 20:: identifier
- 30:: calculator
- 40:: generator
- 50:: output unit
- 110:: communication unit
- 120:: controller
- 130:: storage unit
- 240:: input unit
- 250:: display unit

## Claims

1. An information processing apparatus comprising:
an acquirer configured to acquire patent information related to a plurality of patents;
an identifier configured to identify first information based on the patent information, the first information including:
a number of patents held by each applicant for a predetermined technical classification, and
a number of patents held by a specific applicant for the predetermined technical classification; and
a calculator configured to calculate second information based on the first information, the second information including at least one of a share or a rank of the specific applicant for the predetermined technical classification.

2. The information processing apparatus according to claim 1, wherein the calculator is configured to calculate, as the second information, information including the share and the rank of the specific applicant.

3. The information processing apparatus according to claim 2, wherein, when the predetermined technical classification includes a plurality of classifications, the identifier is configured to identify, as the first information, information including, for each of the plurality of technical classifications, the number of patents held by each applicant and the number of patents held by the specific applicant.

4. The information processing apparatus according to claim 3, further comprising:
an output unit configured to output the second information.

5. The information processing apparatus according to claim 3, wherein the calculator is configured to:
calculate, for each of the plurality of technical classifications, a total evaluation value based on a total number of patents held by the plurality of applicants;
calculate, for each of the plurality of technical classifications, a specific evaluation value based on the number of patents held by the specific applicant; and
determine, for each of the plurality of technical classifications, a share of the specific applicant, based on a ratio of the specific evaluation value to the total evaluation value.

6. The information processing apparatus according to claim 3, wherein the calculator is configured to:
calculate, for each of the plurality of technical classifications, an individual evaluation value based on the number of patents held by each of the plurality of applicants; and
determine, for each of the plurality of technical classifications, a rank of the specific applicant, based on a relative rank of a corresponding evaluation value of the specific applicant among the individual evaluation values.

7. The information processing apparatus according to claim 4, further comprising:
a generator configured to generate display information including a plurality of plots arranged at respective positions in a coordinate system with a first axis representing the rank and a second axis representing the share, each of the plurality of plots corresponding to one of the plurality of technical classifications for the specific applicant,
wherein the output unit is configured to output the display information as the second information.

8. The information processing apparatus according to claim 7,
wherein the calculator is configured to calculate a specific evaluation value based on the number of patents held by the specific applicant for each of the plurality of technical classifications, and
wherein the generator is configured to generate the display information such that each of the plurality of plots has a size based on the specific evaluation value of the corresponding technical classification.

9. The information processing apparatus according to claim 7, wherein the generator is configured to generate the display information such that a common display mode is applied for each related technical classification among the plurality of technical classifications.

10. The information processing apparatus according to claim 7, wherein the generator is configured to generate the display information including an approximation curve that approximates the plurality of plots, and parameters representing the approximation curve.

11. The information processing apparatus according to claim 10, wherein, when the first axis is an X-axis and the second axis is a Y-axis, the generator is configured to generate the approximation curve as a power approximation curve represented by Equation (1): Y = aX^{b} (wherein 0 < a and b < 0).

12. The information processing apparatus according to claim 11, further comprising:
a determiner configured to determine a trend of a technical portfolio of the specific applicant based on at least one of a value of a parameter a or a value of a parameter b in Equation (1),
wherein the generator is configured to generate the display information including a determination result by the determiner.

13. The information processing apparatus according to claim 10,
wherein the calculator is configured to calculate, for each of the plurality of technical classifications, a specific evaluation value based on the number of patents held by the specific applicant, and
wherein the generator is configured to exclude, from a target of approximation by the approximation curve, plots among the plurality of plots for which the specific evaluation value of the corresponding technical classification is less than a predetermined threshold.

14. The information processing apparatus according to claim 7,
wherein each of the plurality of technical classifications corresponds to a predetermined level of a technical category having a plurality of hierarchical levels, with lower levels of the technical category representing more detailed classifications, and
wherein, when at least one of the following conditions is satisfied:
the plurality of plots have ranks lower than a predetermined rank, and
the plurality of plots have shares lower than a predetermined share,
the generator changes the plurality of technical classifications to a lower level of the technical category, and updates the display information including a plurality of plots corresponding to the changed respective technical classifications.

15. The information processing apparatus according to claim 14, wherein the technical category having a plurality of hierarchical levels is based on the International Patent Classification (IPC).

16. The information processing apparatus according to claim 1, wherein the acquirer is configured to acquire the patent information by treating one patent family as a single patent.

17. The information processing apparatus according to claim 1, wherein the acquirer is configured to acquire the patent information for patents in which predetermined date information falls within a predetermined period.

18. An information processing method performed by a computer, the information processing method comprising:
an acquisition step of acquiring patent information related to a plurality of patents;
an identification step of identifying first information based on the patent information, the first information including:
a number of patents held by each applicant for a predetermined technical classification, and
a number of patents held by a specific applicant for the predetermined technical classification; and
a calculation step of calculating second information based on the first information, the second information including at least one of a share or a rank of the specific applicant for the predetermined technical classification.

19. A program causing a computer to execute:
an acquisition step of acquiring patent information related to a plurality of patents;
an identification step of identifying first information based on the patent information, the first information including:
a number of patents held by each applicant for a predetermined technical classification, and
a number of patents held by a specific applicant for the predetermined technical classification; and
a calculation step of calculating second information based on the first information, the second information including at least one of a share or a rank of the specific applicant for the predetermined technical classification.
